# EUROPÄISCHE PATENTSCHRIFT

(11) **EP 0 547 471 B1**
(45) Veröffentlichungstag und Bekanntmachung des Hinweises auf die Patenterteilung: **12.03.1997**
(21) Anmeldenummer: 92120871.6
(22) Anmeldetag: 08.12.1992
(51) Int. Cl.: B01D 71/42, B01D 71/48, B01D 67/00

(54) **Polyacrylnitrilmembran**
Polyacrylnitrile membrane
Membrane de polyacrylonitrile

(30) Priorität: 14.12.1991 DE 4141267
(43) Veröffentlichungstag der Anmeldung: 23.06.1993
(73) Patentinhaber: Akzo Nobel N.V., 6824 BM Arnhem (NL)
(72) Erfinder: Sluma, Heinz-Dieter, Dr., W-8754 Grossostheim (DE); Passlack, Jürgen, Dr., W-5828 Ennepetal (DE); Henke, Karl, W-5600 Wuppertal 1 (DE); Löffelmann, Walter, W-8765 Erlenbach (DE); Schmitt, Harald, W-8761 Laudenbach (DE)
(74) Vertreter: Fett, Günter

(56) Entgegenhaltungen:
- DD-A- 260 868
- DD-A- 262 169
- DE-A- 2 145 183
- DE-A- 3 214 538
- US-A- 4 252 652

## Beschreibung

Die Erfindung betrifft eine asymmetrische semipermeable Membran für die Dialyse und/oder Ultrafiltration aus einem Copolymeren aus Acrylnitril und Acrylester und einem ionischen oder ionisierbaren Monomeren in Form eines Hohlfadens, sowie ein Verfahren zu dessen Herstellung.

In der DD-A-260 868 und der DD-A-262 169 werden Verfahren zur Herstellung von asymmetrischen Hohlfasermembranen aus Acrylnitrilpolymerisaten beschrieben, die eine innere trennaktive Schicht (DD-A-260 868) bzw. eine äußere trennaktive Schicht (DD-A-262 169) aufweisen. Zur Herstellung der Spinnlösungen werden beispielsweise Acrylnitrilpolymere eingesetzt, die aus 93 Gew.% Acrylnitril, 6 Gew.% Acrylsäuremethylester und 1 Gew.% Netriumallylsulfonat bestehen. Die nach dem in diesen Schriften beschriebenen Verfahren hergestellten Membranen weisen in der an die jeweilige trennaktive Schicht angrenzenden Struktur Kavernen auf. Unter Kavernen sind hierbei "relativ große", in der Membranwand befindliche Löcher gemeint.

Aus der US-A-4,181,694 ist ein Verfahren zur Herstellung von Hohlfasern aus Acrylnitrilpolymeren bekannt, wobei ein Acrylnitrilpolymer, das zu mindestens 60 Gew.% aus Acrylnitrileinheiten besteht, in eine wäßrige, 65 bis 95 gew.%ige Nitriersäure (bei 0 bis 5°C) aufgelöst wird, um eine Spinnlösung zu erhalten. Diese Lösung wird dann durch Spinndüsen extrudiert und gleichzeitig eine innere Koagulationsflüssigkeit eingeführt. Nach diesem Verfahren erhält man Hohlfasern, die aus einer äußeren Schicht mit einer porösen Struktur, einer mittleren Schicht mit sogenannten Kavernen, und einer inneren Schicht mit einer porösen Struktur bestehen. Es handelt sich dabei um doppelt asymmetrische Membranen, die auf beiden Seiten eine Haut aufweisen.
Analog zu der obigen Druckschrift beansprucht die DE-C-27 40 252 getrocknete poröse Membranen mit Acrylnitrilpolymereinheiten, die aus einer Trägerschicht und einer beidseitigen Oberflächenschicht bestehen. Ebenfalls wird ein Verfahren zur Herstellung von diesen, auf beiden äußeren Oberflächen eine Haut habende, Membran beansprucht.

Das US-Patent US-A-4,545,910 beansprucht Membranen, die die Leistungsdaten einer üblichen Ultrafiltrationsmembran aufweisen. Das Material für die Membran kann aus einer Vielzahl von Stoffen ausgewählt werden, u.a. auch aus Polyacrylnitrilverbindungen.

Letztlich beansprucht die US-A-5,039,420 eine Membran, die aus einem Copolymer von Acrylnitril und einem C₂-C₄-Hydroxyalkylester von Methacrylsäure als Comonomeren besteht.

Die nach den oben genannten Verfahren hergestellten Membranen weisen jedoch in bestimmten Bereichen nur unbe-friedigende Werte für die Biokompatibilität, so etwa in der Histamin-Freisetzung oder bei der Bradykinin-Generierung, auf.

Bei der Herstellung von synthetischen, nicht-cellulosischen Membranen, etwa solchen aus Materialien wie Polyethersulfon, Polyamid oder Polyacrylnitrilverbindungen, müssen eine Reihe von Eigenschaften des Materials, die bei dem zukünftigen Verwendungszweck der Membran eine Rolle spielen, beachtet werden.

So muß eine solche Membran, wenn sie für die Dialyse verwendet werden soll, eine möglichst geringe Histamin-Freisetzung aufweisen oder bewirken. Eine erhöhte Histamin-Freisetzung führt beim Dialysepatienten zu einer Reihe von unangenehmen Begleiterscheinungen, wie etwa Kopf- und Gliederschmerzen sowie anderen Schmerzzuständen, die sich negativ auf den Gesundheitszustand des Patienten auswirken. Der Grenzwert für die Histamin-Freisetzung ist naturgemäß für jede Person einzeln bzw. individuell unterschiedlich neu festzulegen. Dieser Wert hängt von einer Vielzahl von Faktoren (Alter, Geschlecht, Gewicht, etc.) ab und kann daher nicht allgemein angegeben werden.

Histamin ist eine biologisch hochaktive Substanz, so daß eine zu hohe Freisetzung auf jeden Fall zu vermeiden ist. Hierzu sei etwa auf die Arbeiten von E. Neugebauer et al., Behring Inst. Mitt., **No. 68**, 102-133 (1981) oder W. Lorenz et al., Klin. Wochenschr. **60**, 896-913 (1982) verwiesen.

Auch sollte eine solche Membran möglichst geringe Werte für die Bradykinin-Generierung aufweisen. Die Bradykinin-Generierung ist ebenfalls mit unangenehmen Begleiterscheinungen, die für den Dialysepatienten eine Gefahr darstellen können, verbunden (G. Bönner et al, J. of Cardiovasc. Pharm. **15** (Suppl. 6), S. 46 - S. 56 (1990)). Auch wenn die klinische Bedeutung der Bradykinin-Generierung ebenso wie die der Histamin-Freisetzung noch nicht vollständig erforscht ist, sollte versucht werden, diese Generierung, wie sie etwa durch einen hohen Anteil an Sulfonatverbindungen in der Membran über die sogenannte "Kontaktaktivierung" ausgelöst wird, nach Möglichkeit während der Dialyse zu vermeiden.

Aufgabe der vorliegenden Erfindung war es daher, eine Membran zur Verfügung zu stellen, bei der der Wert für die Histaminfreisetzung einen möglichst geringen Betrag aufweist und die möglichst keine Kontaktaktivierung auslöst.

Die Aufgabe wird gelöst durch eine Membran gemäß dem Oberbegriff des Anspruchs 1, die dadurch gekennzeichnet ist, daß das Copolymer zusammengesetzt ist aus 90,50 bis 95,00 Gew.% Acrylnitril, 4,99 bis 8,60 Gew.% Acrylester und 0,01 bis 0,90 Gew.% des ionischen oder ionisierbaren Monomeren. Die Membran weist auf der Innenseite des Hohlraums eine Haut auf, besitzt oberhalb der Haut keinen Porenradiengradienten und enthält oberhalb der Haut ebenfalls keine Makrovoids. Makrovoids sind "Löcher" in der Membran, die u.a. dazu führen, daß die Membran eine deutlich geringere mechanische Stabilität besitzt.

Bevorzugt beträgt die Hautdicke auf der Innenseite des Hohlraums 0,1 bis 2,0 µm.

Bevorzugt ist die Zusammensetzung des Copolymeren 92,3 - 94,1 Gew% Acrylnitril, 5,5-7,0 Gew.% Acrylester und 0,4 bis 0,7 Gew% des ionischen oder ionisierbaren Monomeren.

In Ausgestaltung der Erfindung wird das ionische oder ionisierbare Monomere aus der Gruppe der Methallylsulfonsäuren ausgewählt.

Die Membran weist ein Oberflächenpotential von -1 Volt bis +1 Volt auf.

In besonderer Ausgestaltung der Erfindung ist die Membran gasdicht. Als gasdicht wird im Sinne der Erfindung Gasdichtigkeit bezüglich Stickstoffdurchtritt definiert. Für die Prüfung der Gasdichtigkeit wird die folgende standarisierte Testmethode verwendet: Ein trockenes Bündel der erfindungsgemäßen Hohlfasermembranen wird in ein Bad mit Propanol eingetaucht und lumenseitig N₂ in verschiedenen Druckstufen (bis maximal 3,5 bar) hindurchgeleitet. Treten keine Gasblasen auf, ist die Membran als gasdicht anzusehen.

Es war ebenfalls Aufgabe der Erfindung, ein geeignetes Verfahren zur Herstellung einer solchen Membran zur Verfügung zu stellen, und zwar so, daß bei diesem Verfahren außerdem die Steuerung der Schichtdicke der Haut und die Zusammensetzung des Membranträgers durch einfach einzustellende Parameter erfolgen kann.

Diese ebenfalls gestellte Aufgabe wird gelöst durch ein Verfahren zur Herstellung einer asymmetrischen semipermeablen Membran mittels des Naßspinnverfahrens und wobei als Ausgangspolymer ein Copolymer aufgebaut aus 90,50 bis 95,00 Gew.% Acrylnitril, 4,99 bis 8,60 Gew.% Acrylester und 0,01 bis 0,9 Gew.% des ionischen oder ionisierbaren Monomeren verwendet wird, dadurch gekennzeichnet, daß die
- - Spinnlösung aus: 18 - 24 Gew.% Polymer
70 - 80 Gew.% eines aprotischen Lösungsmittels
0 - 7 Gew.% Wasser,
- - die Innenfüllung aus: 10 - 40 Gew.% eines aprotischen Lösungsmittels
50 - 85 Gew.% Glycerin
2 - 12 Gew.% Wasser
- - und das Fällbad aus: 75 - 85 Gew.% eines aprotischen Lösungsmittels
15 - 25 Gew.% Wasser
- weniger als: 3 Gew.% Glycerin
besteht, und daß das Spinnen bei 60 - 90°C erfolgt, wobei die
- Temperatur des Fällbades 60 - 90°C,
- das Verhältnis Düsenaustrittgeschwindigkeit der Spinnlösung zur Abzugsgeschwindigkeit des Hohlfadens aus dem Fällbad
   1 : 0,6 bis 1 : 2,5 beträgt,
- eine ein- oder mehrstufige Verstreckung
   (1 : 1,1 bis 1 : 2,5) erfolgt
- anschließend bei 65 - 75°C relaxiert
- und danach eine Temperung ebenfalls bei der gleichen Temperatur durchgeführt wird,
danach eine Behandlung mit einem Weichmacherbad in einem Gemisch aus Glycerin und Wasser erfolgt und nach dem Aufwickeln die Wickel auf übliche Weise weiterverarbeitet werden.

Das aprotische Lösungsmittel kann etwa aus der Gruppe Dimethylacetamid, Dimethylformamid, N-Methylpyrrolidon oder Dimethylsulfoxid ausgewählt werden.

Die bevorzugte Spinntemperatur beträgt ebenfalls wie die bevorzugte Fällbadtemperatur, 75 - 85°C.

Bevorzugt beträgt das Verhältnis Düsenaustrittsgeschwindigkeit der Spinnlösung zur Abzugsgeschwindigkeit des Hohlfadens aus dem Fällbad 1 : 0,7 bis 1 : 1,7.

In Ausgestaltung der Erfindung beträgt die Differenz zwischen der Fällbadtemperatur und der Spinntemperatur weniger als 5°C.

Bevorzugt erfolgt das Aufwickeln auf eine runde Haspel mit einem Kreuzungswinkel von 0 - 20°C, bezogen auf die Längsachse.

In weiterer Ausgestaltung der Erfindung werden nach dem Aufwickeln die Wickel in nassem Zustand geschnitten und die so entstandenen Segmente in nassem Zustand eingewickelt und dann getrocknet.

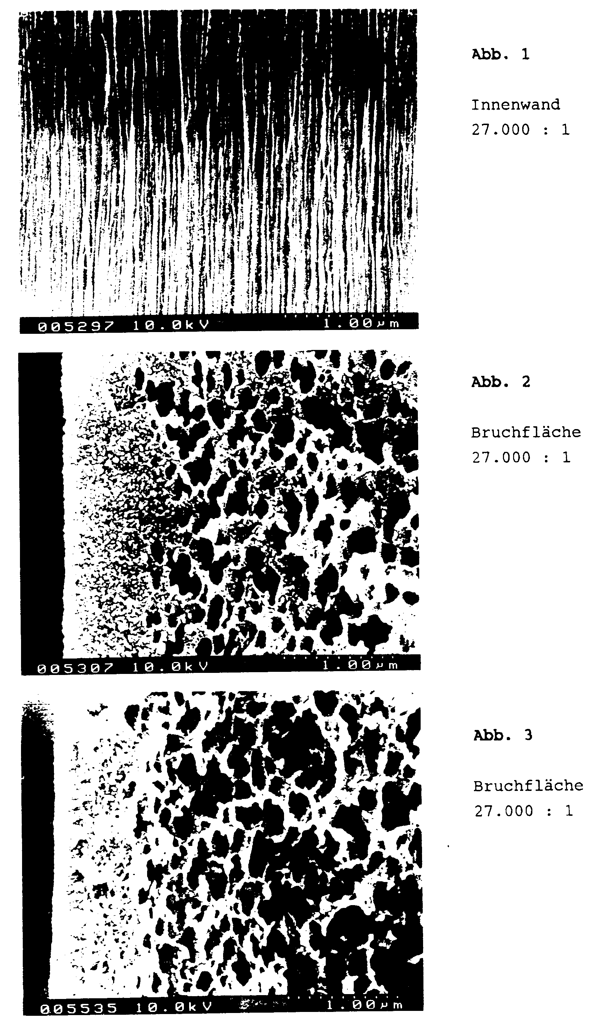

- Abbildung 1: zeigt eine elektronenmikroskopische Aufnahme der Oberfläche der Innenwand der erfindungsgemäßen Membran im Ausgangszustand
(Maßstab 27.000 : 1, Foto 005297)
- Abbildung 2: zeigt die gleiche Membran im gleichen Maßstab (27 000 : 1, Foto 005307), und zwar die Bruchfläche auf der Innenrandseite).
- Abbildung 3: zeigt ebenfalls die Bruchfläche am Innenrand (27.000 : 1, Foto 005535), jetzt aber nach Gefriertrocknung.

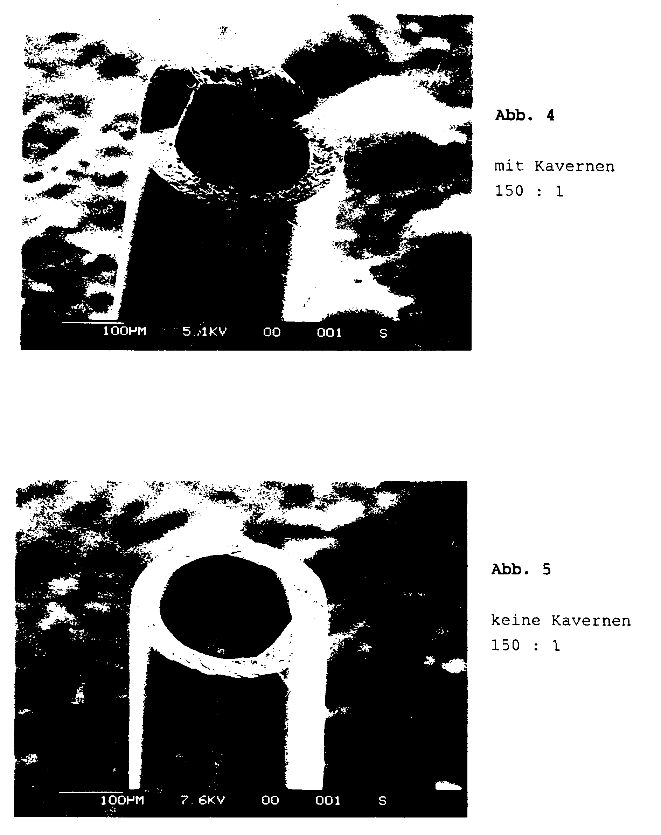

- Abbildung 4: zeigt eine nicht-erfindungsgemäße Membran, wie sie etwa gemäß Beispiel 6 erhalten werden kann. Bei der vorliegenden 150-fachen Vergrößerung sind deutliche Kavernen in der Trägerschicht zu erkennen.
- Abbildung 5: zeigt (als Gegenstück zu Abbildung 4) eine erfindungsgemäße Membran des Beispiels 2 bei gleicher Vergrößerung. Gemäß der Erfindung sind keine Kavernen zu erkennen.

Für die nachfolgenden Beispiele besteht das Copolymer für die Spinnlösung aus 93,5 Gew% Polyacrylnitril, 6 Gew% Methacrylat und 0,5 Gew% Natriummethallylsulfonat.

Die Erfindung wird durch die nachstehenden Beispiele erläutert.

### Beispiel 1:

Eine Spinnlösung, bestehend aus 22 Gew.% des Copolymeren und 78 Gew.% Dimethylsulfoxid (DMSO) wird durch eine handelsübliche Ringspaltdüse extrudiert, wobei gleichzeitig eine Lösung aus 15 Gew.% DMSO, 81 Gew.% Glycerin und 4 Gew.% Wasser als Innenfüllung in den Hohlraum des sich bildenden Hohlfadens eingebracht wird. Die Temperatur der Spinndüse beträgt 75°C. Der Hohlfaden wird in einem Fällbad der Zusammensetzung 80 Gew.% DMSO und 20 Gew.% Wasser bei 80°C ausgefällt und anschließend mit einer Geschwindigkeit von 22 m/min aus dem Fällbad abgezogen. Nach Waschen bei 40°C wurde mit einer Geschwindigkeit von 43 m/min bei 70°C verstreckt und mit einer Geschwindigkeit von 41 m/min bei ebenfalls 70°C relaxiert und anschließend bei der gleichen Temperatur getempert. Die Nachbehandlung erfolgte in einem Bad aus 25 Gew.% Glycerin und 75 Gew.% Wasser. Nach dem Aufwickeln und Schneiden wurde bei 77°C für 20 Minuten getrocknet.

Man erhielt eine Hohlfadenmembran mit 216 µm Innendurchmesser und 292 µm Außendurchmesser.

Die Eigenschaften der Membran wurden an Bündeln von jeweils 100 Hohlfäden gemessen, wobei bei den Permeabilitätsmessungen die Hohlfäden von innen angeströmt wurden.

Für die Messung der Ultrafiltrationsrate von Albumin/Cytochrom C-Lösung diente eine wäßrige, phosphatgepufferte Kochsalzlösung, die 50 g Albumin, 0,1 g Cytochrom C und 0,03 g Natriumdithionit pro Liter Lösung enthielt.

Der Hohlfaden wies die folgenden Eigenschaften auf:

| | |
|---|---|
| Ultrafiltrationsrate mit Wasser: | 87 ml/(m²h mm Hg) |
| Ultrafiltrationsrate mit Albumin/Cytochrom C-Lösung: | 21 ml/(m²h mm Hg) |
| Siebkoeffizient Albumin: | 0.00 |
| Siebkoeffizient Cytochrom C: | 0,59 |
| Dialytische Permeabilität für Vitamin B12: | 12,7x10⁻³ cm/min |
| Dialytische Permeabilität für Kreatinin: | 44,6x10⁻³ cm/min |

### Beispiel 2:

Das in Beispiel 1 beschriebene Verfahren wurde wiederholt, wobei jedoch eine Polymerspinnlösung aus 22 Gew.% Copolymer, 75 Gew.% DMSO und 3 Gew.% Wasser sowie eine Innenfüllungsflüssigkeit aus 30 Gew.% DMSO, 62 Gew.% Glycerin und 8 Gew.% Wasser verwendet wurden.

Alle anderen Parameter wurden wie bei Beispiel 1 eingestellt, wobei jedoch der Abzug aus dem Fällbad 12 m/min betrug und auf 21,5 m/min verstreckt wurde. Die Relaxierung betrug 20,5 m/min.

Der so erhaltene Membranhohlfaden wies außen einen Durchmesser von 288 µm und innen einen Durchmesser von 216 µm auf. Am Hohlfaden wurden die folgenden Leistungsdaten gemessen:

| | |
|---|---|
| Ultrafiltrationsrate mit Wasser: | 149 ml/(m²h mm Hg) |
| Ultrafiltrationsrate mit Albumin/Cytochrom C-Lösung: | 27 ml/(m²h mm Hg) |
| Siebkoeffizient Albumin: | 0,00 |
| Siebkoeffizient Cytochrom C: | 0,70 |
| Dialytische Permeabilität für Vitamin B12: | 16,0x10⁻³ cm/min |
| Dialtytische Permeabilität für Kreatinin: | 48,6x10⁻³ cm/min |

### Beispiel 3:

Beispiel 3 wurde unter denselben Bedingungen und Parametern wie Beispiel 2 ausgeführt. Lediglich die Abzugsgeschwindigkeit aus dem Fällbad wurde auf 15 m/min erhöht.

Der so erhaltene Membranhohlfaden hatte einen Durchmesser von 268 µm außen und 208 µm innen.

Er wies die folgenden Eigenschaften auf:

| | |
|---|---|
| Ultrafiltrationsrate mit Wasser: | 273 ml/(m²h mm Hg) |
| Ultrafiltrationsrate mit Albumin/Cytochrom C-Lösung: | 13 ml/(m²h mm Hg) |
| Siebkoeffizient Albumin: | 0,00 |
| Siebkoeffizient Cytochrom C: | 0,61 |
| Dialytische Permeabilität für Vitamin B12: | 7,3x10⁻³ cm/min |
| Dialtytische Permeabilität für Kreatinin: | 32,5x10⁻³ cm/min |

Die drei erfindungsgemäßen Membranen sind damit für die Dialyse hervorragend geeignet.
Sie zeichnen sich außerdem gegenüber den bisher bekannten Polyacrylnitrilmembranen durch sehr geringe Werte für die Histamin-Freisetzung und Bradykinin-Generierung aus.

### Beispiel 4: (Vergleichsbeispiel)

Bei diesem Beispiel wird eine nicht-erfindungsgemäße Zusammensetzung für die Innenfüllung verwendet.

### Ausführung:

Eine Spinnlösung, bestehend aus 20 Gew.% Copolymer 76 Gew.% DMSO und 4 Gew.% Wasser wurde durch eine Ringspaltdüse wie in Beispiel 1 extrudiert und gleichzeitig eine Innenfüllflüssigkeit, bestehend aus 80 Gew.% DMSO, 10 Gew.% Glycerin und 10 Gew.% Wasser, in den sich bildenden Hohlfäden eingebracht. Die Düsentemperatur betrug 55°C. Der Hohlfaden wurde in einem Fällbad der Zusammensetzung 74 Gew-% DMSO und 26 Gew.% Wasser bei 80°C gefällt und mit einer Geschwindigkeit von 15 m/min aus dem Fällbad abgezogen.

Die Waschung erfolgte bei 40°C, die anschließende Verstreckung (auf 22 m/min), Relaxierung (auf 21 m/min) und Temperung erfolgten bei 70°C.

Das Nachbehandlungsbad bestand aus 42 Gew.% Glycerin und 58 Gew.% Wasser. Die zuletzt anschließende Trocknung erfolgte bei 66°C (20 Minuten).

Die so erhaltene Membran mit 270 µm Außen- und 216 µm Innendurchmesser wies keine Haut auf der Innenseite auf. Wie die nachfolgenden Leistungsdaten zeigen, wurde eine (nicht-erfindungsgemäße) mikroporöse Membran erhalten.

| | |
|---|---|
| Ultrafiltrationsrate mit Wasser: | 1583 ml (m²h mm Hg) |
| Ultrafiltrationsrate mit Albumin/Cytochrom C-Lösung: | 680 ml (m²h mm Hg) |
| Siebkoeffizient Albumin: | 0,86 |
| Siebkoeffizient Cytochrom C: | 1,00 |

### Beispiel 5: (Vergleichsbeispiel)

Bei diesem Beispiel ist wie in Beispiel 4 die Zusammensetzung der Innenfüllung außerhalb des Anspruchs 5. Zudem erfolgt (nicht-erfindungsgemäß) keine Verstreckung.

### Ausführung:

Eine Spinnlösung der Zusammensetzung 22 Gew.% Copolymer, 75 Gew.% DMSO und 3 Gew.% Wasser wurde durch die gleiche Düse wie in Beispiel 4 extrudiert (Düsentemperatur: 80°C) und gleichzeitig eine Innenfüllflüssigkeit, bestehend aus 5 Gew.% DMSO, 90 Gew.% Glycerin und 5 Gew.% Wasser in den Hohlraum des sich bildenden Hohlfadens eingebracht. Der Faden wurde mit 15 m/min aus dem Fällbad abgezogen und bei 40°C gewaschen. Danach wurde weder verstreckt noch relaxiert, es fand lediglich eine Temperung bei 70°C statt. Nach der Temperung wurde wie in Beispiel 4 nachbehandelt und das Fadenbündel anschließend für 20 Minuten bei 77°C getrocknet.

Der so erhaltene Hohlfaden wies eine dichte Struktur ohne mikroporöse Trägerschicht auf. Der Außendurchmesser betrug 284 µm und der Innendurchmesser 224 µm.

Wie die nachfolgenden Angaben zeigen, ist die so hergestellte, nicht-erfindungsgemäße Membran für eine praktische Anwendung nicht verwendbar und weist z.B. eine viel zu geringe dialytische Permeabilität auf.

| | |
|---|---|
| Ultrafiltrationsrate mit Wasser: | 3 ml/(m²h mm Hg) |
| Ultrafiltrationsrate mit Albumin/Cytochrom C-Lösung: | 0,1 ml/(m²h mm Hg) |
| Siebkoeffizient Albumin: | 0,00 |
| Siebkoeffizient Cytochrom C: | 0,01 |
| Dialytische Permeabilität für Vitamin B12: | 2,4x10⁻³ cm/min |
| Dialtytische Permeabilität für Kreatinin: | 11,5x10⁻³ cm/min |

### Beispiel 6: (Vergleichsbeispiel)

Wie in den Beispielen 4 und 5 ist die Innenfüllung nicht-erfindungsgemäß zusammengesetzt.

### Ausführung:

Eine Spinnlösung wie in Beispiel 2 wird durch eine Ringspaltdüse wie in Beispiel 1 extrudiert und gleichzeitig eine Innenfüllung, bestehend aus 30 Gew.% DMSO, 56 Gew.% Glycerin und 14 Gew.% Wasser in den sich bildenden Hohlfaden eingebracht. Die Temperatur der Düse betrug 80°C. Der Hohlfaden wurde in einem Fällbad der Zusammensetzung 80 Gew.% DMSO und 20 Gew.% Wasser ausgefällt und mit einer Geschwindigkeit von 15 m/min aus dem Fällbad abgezogen. Nach dem Waschen bei 40°C wurde der Faden verstreckt (21 m/min) und relaxiert (20 m/min), anschließend bei 70°C getempert.

Die Nachbehandlung erfolgte in einem Bad aus 30 Gew.% Glycerin und 70 Gew.% Wasser, die als letzter Schritt ausgeführte Trocknung wie bei Beispiel 5.

Der so erhaltene Hohlfaden mit 282 µm Außen- und 216 µm Innendurchmesser weist Kavernen in der Trägerschicht auf. Eine nicht-erfindungsgemäße Zusammensetzung der Innenfüllung führt also zu einer nicht-erfindungsgemäßen Membran.

Auch die nachfolgend wiedergegebenen Leistungsdaten zeigen, daß die Membran durch die geringe Trennleistung im Bereich von 10 - 70.000 Dalton für eine übliche Anwendung nicht in Frage kommt.

| | |
|---|---|
| Ultrafiltrationsrate mit Wasser: | 489 ml/(m²h mm Hg) |
| Ultrafiltrationsrate mit Albumin/Cytochrom C-Lösung: | 99 ml/(m²h mm Hg) |
| Siebkoeffizient Albumin: | 0,72 |
| Siebkoeffizient Cytochrom C: | 0,87 |
| Dialytische Permeabilität für Vitamin B12: | 11,6x10⁻³ cm/min |
| Dialtytische Permeabilität für Kreatinin: | 39,4x10⁻³ cm/min |

## Patentansprüche

1. Asymmetrische semipermeable Membran für die Dialyse und/oder Ultrafiltration aus einem Copolymeren aus Acrylnitril und Acrylester und einem ionischen oder ionisierbaren Monomeren in der Form eines Hohlfadens, dadurch gekennzeichnet, daß das Copolymer zusammengesetzt ist aus 90,50 - 95,00 Gew% Acrylnitril, 4,99 bis 8,60 Gew% Acrylester und 0,01 bis 0,90 Gew% des ionischen oder ionisierbaren Monomeren.

2. Asymmetrische semipermeable Membran nach Anspruch 1, dadurch gekennzeichnet, daß die Membran auf der Innenseite des Hohlraums eine Haut aufweist, oberhalb der Haut keinen Porenradiengradienten besitzt und oberhalb der Haut keine Makrovoids enthält.

3. Asymmetrische semipermeable Membran nach Anspruch 2, dadurch gekennzeichnet, daß die Haut auf der Innenseite des Hohlraumes eine Dicke von 0,1 bis 2,0 µm aufweist.

4. Asymmetrische semipermeable Membran nach einem oder mehreren der Ansprüche 1 bis 3, dadurch gekennzeichnet, daß das Copolymer zusammengesetzt ist aus 92,3 bis 94,1 Gew% Acrylnitril, 5,5 bis 7 Gew% Acrylester und 0,4 bis 0,7 Gew% des ionischen oder ionisierbaren Monomeren.

5. Asymmetrische semipermeable Membran nach einem oder mehreren der Ansprüche 1 bis 4, dadurch gekennzeichnet, daß die ionischen oder ionisierbaren Monomeren aus der Gruppe der Methallylsulfonsäuren ausgewählt werden.

6. Asymmetrische semipermeable Membran nach einem oder mehreren der Ansprüche 1 bis 5, dadurch gekennzeichnet, daß die Membran ein Oberflächenpotential von -1 Volt bis +1 Volt besitzt.

7. Asymmetrische semipermeable Membran nach einem oder mehreren der Ansprüche 1 bis 6, dadurch gekennzeichnet, daß die Membran gasdicht ist.

8. Verfahren zur Herstellung einer asymmetrischen semipermeablen Membran gemäß den Ansprüchen 1 bis 7 mittels des Naßspinnverfahrens und wobei als Ausgangspolymer ein Copolymer aufgebaut aus 90,50 bis 95,00 Gew.% Acrylnitril, 4,99 bis 8,60 Gew.% Acrylester und 0,01 bis 0,90 Gew.% des ionischen oder ionisierbaren Monomeren verwendet wird, dadurch gekennzeichnet, daß die
- Spinnlösung aus 18 - 24 Gew.% Polymer
70 - 80 Gew.% aprotisches Lösungsmittel
0 - 7 Gew.% Wasser,
- die Innenfüllung aus 10 - 40 Gew.% aprotisches Lösungsmittel
50 - 85 Gew.% Glycerin
2 - 12 Gew.% Wasser
- und das Fällbad aus 75 - 85 Gew.% aprotisches Lösungsmittel
15 - 25 Gew.% Wasser
weniger als 3 Gew.% Glycerin
besteht, und daß das Spinnen bei 60 - 90°C erfolgt, wobei die
- Temperatur des Fällbades 60 - 90°C,
- das Verhältnis Düsenaustrittgeschwindigkeit der Spinnlösung zur Abzugsgeschwindigkeit des Hohlfadens aus dem Fällbad
1 : 0,6 bis 1 : 2,5 beträgt,
- eine ein- oder mehrstufige Verstreckung (1 : 1,1 bis 1 : 2,5) erfolgt
- anschließend bei 65 - 75°C relaxiert
- und danach eine Temperung ebenfalls bei der gleichen Temperatur durchgeführt wird,
danach eine Behandlung mit einem Weichmacherbad aus einem Gemisch aus Glycerin und Wasser erfolgt und nach dem Aufwickeln die Wickel auf übliche Weise weiterverarbeitet werden.

9. Verfahren nach Anspruch 8, dadurch gekennzeichnet, daß das aprotische Lösungsmittel aus der Gruppe Dimethylformamid, Dimethylacetamid, N-Methylpyrrolidon oder Dimethylsulfoxid gewählt wird.

10. Verfahren zur Herstellung einer asymmetrischen semipermeablen Membran nach Anspruch 8, dadurch gekennzeichnet, daß das Spinnen bei 75 bis 85° erfolgt.

11. Verfahren zur Herstellung einer asymmetrischen semipermeablen Membran nach einem oder mehreren der Ansprüche 8 bis 10, dadurch gekennzeichnet, daß die Temperatur des Fällbades 75 bis 85° beträgt.

12. Verfahren zur Herstellung einer asymmetrischen semipermeablen Membran nach einem oder mehreren der Ansprüche 8 bis 11, dadurch gekennzeichnet, daß das Verhältnis Düsenaustrittsgeschwindigkeit der Spinnlösung zur Abzugsgeschwindigkeit des Hohlfadens aus dem Fällbad
1 : 1,7 bis 1 : 1,2 beträgt.

13. Verfahren zur Herstellung einer asymmetrischen semipermeablen Membran nach einem oder mehreren der Ansprüche 8 bis 12, dadurch gekennzeichnet, daß die Differenz zwischen der Fällbadtemperatur und der Spinntemperatur weniger als 5° beträgt.

14. Verfahren nach einem oder mehreren der Ansprüche 8 bis 13, dadurch gekennzeichnet, daß das Aufwickeln auf eine runde Haspel mit einem Kreuzungswinkel von 0 - 20°, bezogen auf die Längsachse, erfolgt.

15. Verfahren zur Herstellung einer asymmetrischen Membran nach einem oder mehreren der Ansprüche 8 bis 14, dadurch gekennzeichnet, daß die Wickel in nassem Zustand geschnitten werden und die so entstandenen Segmente in nassem Zustand eingewickelt werden, woraufhin dann eine Trocknung erfolgt.

## Claims

1. Asymmetric semipermeable membrane for dialysis and/or ultrafiltration consisting of a copolymer of acrylonitrile and acrylic ester and an ionic or ionizable monomer in the form of a hollow fiber, characterized in that the copolymer is composed of 90.50 to 95.00 % by weight acrylonitrile, 4.99 to 8.60 % by weight acrylic ester, and 0.01 to 0.90 % by weight of the ionic or ionizable monomer.

2. Asymmetric semipermeable membrane according to Claim 1, characterized in that the membrane has a skin on the inside of the hollow space, possesses no pore radial gradients above the skin and contains no macrovoids above the skin.

3. Asymmetric semipermeable membrane according to Claim 2, characterized in that the skin on the inside of the hollow space has a thickness of 0.1 to 2.0 µm.

4. Asymmetric semipermeable membrane according to one or more of Claims 1 to 3, characterized in that the copolymer is composed of 92.3 to 94.1 % by weight acrylonitrile, 5.5 to 7 % by weight acrylic ester, and 0.4 to 0.7 % by weight of the ionic or ionizable monomer.

5. Asymmetric semipermeable membrane according to one or more of Claims 1 to 4, characterized in that the ionic or ionizable monomers are selected from the methallyl sulfonic acid group.

6. Asymmetric semipermeable membrane according to one or more of Claims 1 to 5, characterized in that the membrane has a surface potential of -1 V to +1 V.

7. Asymmetric semipermeable membrane according to one or more of Claims 1 to 6, characterized in that the membrane is impermeable to gas.

8. Method for manufacturing an asymmetric semipermeable membrane according to Claims 1 to 7 using the wet spinning method where a copolymer composed of 90.50 to 95.00 % by weight acrylonitrile, 4.99 to 8.60 % by weight acrylic ester, and 0.01 to 0.90 % by weight of the ionic or ionizable monomer is used as a starting polymer, the method being characterized in that
- the dope consists of 18 - 24 % by weight polymer
70 - 80 % by weight aprotic solvent
0 - 7 % by weight water,
- the inner filling consists of
10 - 40 % by weight aprotic solvent
50 - 85 % by weight glycerol
2 - 12 % by weight water
- and the precipitating bath consists of
75 - 85 % by weight aprotic solvent
15 - 25 % by weight water
less than 3 % by weight glycerol and that spinning is conducted at 60 - 90°C, where
- the temperature of the precipitating bath is 60 - 90°C,
- the ratio of the spinneret emergence rate of the dope to the drawing-off speed of the hollow fiber from the precipitating bath is 1 : 0.6 to 1 : 2.5,
- single- or multistage drawing 1 : 1.1 to 1 : 2.5 is conducted
- subsequently, the fiber is relaxed at 65 - 75°C
- and then tempering is also conducted at the same temperature,
after which treatment with a softening bath consisting of a mixture of glycerol and water is conducted and following the winding up the lap is processed further in the usual manner.

9. Method according to Claim 8, characterized in that the aprotic solvent is selected from the group: dimethylformamide, dimethylacetamide, N-methylpyrrolidone or dimethyl sulfoxide.

10. Method for manufacturing an asymmetric semipermeable membrane according to Claim 8, characterized in that spinning takes place at 75 to 85°.

11. Method for manufacturing an asymmetric semipermeable membrane according to one or more of Claims 8 to 10, characterized in that the temperature of the precipitating bath is 75 to 85°.

12. Method for manufacturing an asymmetric semipermeable membrane according to one or more of Claims 8 to 11, characterized in that the ratio of the spinneret emergence rate of the dope to the drawing-off speed of the hollow fiber from the precipitating bath is 1 : 1.7 to 1 : 1.2.

13. Method for manufacturing an asymmetric semipermeable membrane according to one or more of Claims 8 to 12, characterized in that the difference between the temperature of the precipitating bath and the spinning temperature is less than 5°.

14. Method according to one or more of Claims 8 to 13, characterized in that winding up on a round reel takes place with a crossing angle between 0 and 20° relative to the longitudinal axis.

15. Method for manufacturing an asymmetric semipermeable membrane according to one or more of Claims 8 to 14, characterized in that the lap is cut while wet and the segments thus formed are lapped while wet, after which drying takes place.

## Revendications

1. Membrane asymétrique semi-perméable pour la dialyse et/ou l'ultrafiltration constituée d'un copolymère d'acrylonitrile et d'un ester d'acide acrylique ainsi que d'un monomère ionique ou ionisable, ayant la forme d'une fibre creuse,
caractérisée en ce que le copolymère est composé de 90,50 - 95,00 % en poids d'acrylonitrile, de 4,99 - 8,60 % en poids d'ester d'acide acrylique et de 0,01 à 0,90 % en poids du monomère ionique ou ionisable.

2. Membrane asymétrique semi-perméable conforme à la revendication 1, caractérisée en ce que la membrane comporte une peau sur la face interne de l'espace creux, qu'elle ne présente pas de gradient de diamètre des pores au-dessus de la peau et qu'elle ne présente pas de macrovides au-dessus de la peau.

3. Membrane asymétrique semi-perméable conforme à la revendication 2, caractérisé en ce que la peau située sur la face interne de l'espace creux a une épaisseur comprise entre 0,1 et 2,0 µm.

4. Membrane asymétrique semi-perméable conforme à une ou plusieurs des revendications 1 à 3, caractérisée en ce que le copolymère est composé de 92,3 à 94,1 % en poids d'acrylonitrile, de 5,5 à 7 % en poids d'ester d'acide acrylique et de 0,4 à 0,7 % en poids du monomère ionique ou ionisable.

5. Membrane asymétrique semi-perméable conforme à une ou plusieurs des revendications 1 à 4, caractérisée en ce que les monomères ioniques ou ionisables sont choisis parmi les acides méthallylsulfoniques.

6. Membrane asymétrique semi-perméable conforme à une ou plusieurs des revendications 1 à 5, caractérisée en ce que la membrane a un potentiel de surface compris entre -1 volt et +1 volt.

7. Membrane asymétrique semi-perméable conforme à une ou plusieurs des revendications 1 à 6, caractérisé en ce que la membrane est imperméable aux gaz.

8. Procédé pour la préparation d'une membrane asymétrique semi-perméable conforme aux revendications 1 à 7 au moyen d'un procédé de filage par voie humide utilisant, comme polymère de base, un copolymère composé de 90,50 à 95,00 % en poids d'acrylonitrile, de 4,99 à 8,60 % en poids d'ester d'acide acrylique et de 0,01 à 0,90 % en poids du monomère ionique ou ionisable, caractérisé en ce que
la solution de filage est composée de
18 - 24 % en poids de polymère,
70 - 80 % en poids d'un solvant aprotique,
0 à 7 % en poids d'eau,
le liquide intérieur est composé de
10 - 40 % en poids d'un solvant aprotique,
50 - 85 % en poids de glycérol,
2 - 12 % en poids d'eau,
et le bain coagulant est composé de
75 - 85 % en poids d'un solvant aprotique,
15 - 25 % d'eau,
moins de 3 % en poids de glycérol,
et en ce que le filage se fait à une température comprise entre 60 et 90 °C, où
- la température du bain est comprise entre 60 et 90 °C,
- le rapport de la vitesse d'extrusion de la solution de filage à la vitesse de tirage de la fibre creuse à partir du bain coagulant est compris entre 1/0,6 et 1/2,5,
- l'on effectue ensuite un étirage en une ou plusieurs étapes (1/1,1 à 1/2,5),
- l'on relâche ensuite la fibre à une température comprise entre 65- 75 °C,
- l'on étuve ensuite la fibre à cette même température,
en ce que l'on traite ensuite dans un bain plastifiant qui est un mélange d'eau et de glycérol, puis en ce que l'on traite ensuite, après embobinage, la bobine de manière habituelle.

9. Procédé conforme à la revendication 8, caractérisé en ce que le solvant aprotique est choisi dans le groupe formé par le diméthylformamide, le diméthylacétamide, la N-méthylpyrrolidone ou le diméthylsulfoxyde.

10. Procédé pour la préparation d'une membrane asymétrique semi-perméable conforme à la revendication 8, caractérisé en ce que le filage se fait à une température comprise entre 75 et 85 °C.

11. Procédé pour la préparation d'une membrane asymétrique semi-perméable conforme à une ou plusieurs des revendications 8 à 10, caractérisé en ce que la température du bain coagulant est comprise entre 75 et 85 °C.

12. Procédé pour la préparation d'une membrane asymétrique semi-perméable conforme à une ou plusieurs des revendications 8 à 11, caractérisé en ce que le rapport de la vitesse d'extrusion de la solution de filage à la vitesse de tirage de la fibre creuse à partir du bain coagulant est compris entre 1/1,7 et 1/1,2.

13. Procédé pour la préparation d'une membrane asymétrique semi-perméable conforme à une ou plusieurs des revendications 8 à 12, caractérisé en ce que la différence entre la température du bain coagulant et la température de filage est inférieure à 5 °C.

14. Procédé conforme à une ou plusieurs des revendications 8 à 13, caractérisé en ce que l'embobinage sur un dévidoir circulaire se fait à un angle de 0 - 20° par rapport à l'axe longitudinal.

15. Procédé pour la préparation d'une membrane asymétrique conforme à une ou plusieurs des revendications 8 à 14, caractérisé en ce que les bobines sont coupées à l'état mouillé et en ce que les segments ainsi obtenus sont enroulés à l'état humide, puis séchés.
